# FASCICULE DE BREVET EUROPEEN

(11) **EP 0 696 868 B1**
(45) Date de publication et mention de la délivrance du brevet: **22.03.2000**
(21) Numéro de dépôt: 95401734.9
(22) Date de dépôt: 21.07.1995
(51) Int. Cl.: H04N 3/09, G02B 26/10

(54) **Dispositif de balayage en particulier pour système d'imagerie**
Abtastgerät, insbesondere für Abbildungssystem
Scanning apparatus, particularly for imaging systems

(30) Priorité: 10.08.1994 FR 9409891
(43) Date de publication de la demande: 14.02.1996
(73) Titulaire: SAGEM SA, 75116 Paris (FR)
(72) Inventeur: Perrin, Jean-Claude, F-75625 Paris Cédex 13 (FR)
(74) Mandataire: Bloch, Gérard

(56) Documents cités:
- FR-A- 2 656 430
- US-A- 4 117 331
- US-A- 4 419 692

## Description

Pour l'observation d'une scène, il est connu d'utiliser un dispositif déflecteur opto-mécanique qui balaye la totalité de la scène par une fenêtre d'observation dont la suite des images élémentaires est reçue sur une barrette de détecteurs pour ensuite reconstituer l'image de la scène et l'afficher par des moyens de restitution d'image. Ce balayage est en particulier utilisé dans le domaine de l'imagerie infra-rouge, dans lequel on ne dispose pas de détecteurs de grande taille.

De tels dispositifs trouvent leur application par exemple dans les systèmes optiques de pilotage ou de tir.

Le balayage de la scène est effectué successivement selon plusieurs bandes jointives car la taille, en nombre de détecteurs élémentaires, de la barrette recevant l'image de la fenêtre est insuffisante.

Il faut donc effectuer des balayages "horizontaux", donc dans un sens, séparés par des sauts de balayage "verticaux", dans un sens perpendiculaire.

Pour cela, il est connu d'utiliser deux miroirs rotatifs, à axes orthogonaux, respectivement commandés par deux moteurs synchronisés entre eux, et de disposer, entre les miroirs, un système optique pour conjuguer les pupilles d'entrée et de sortie de l'ensemble déflecteur.

Un tel dispositif est techniquement satisfaisant mais est complexe et coûteux.

Il est aussi connu d'utiliser un seul miroir, constitué d'un tronc de pyramide polygonal monté rotatif autour d'un axe passant par le sommet de la pyramide, comportant une pluralité de facettes latérales planes réfléchissant successivement vers la barrette les rayons qu'elles reçoivent en provenance de bandes de la scène.

L'inclinaison de chaque facette sur l'axe de rotation est particulier à chacune, ce qui assure le balayage vertical d'une bande à la suivante.

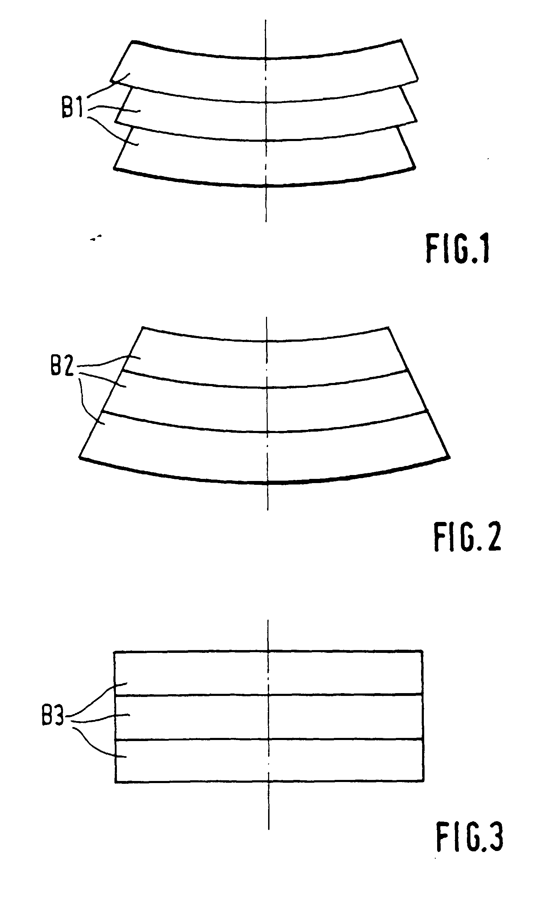

Ce type de balayage induit cependant des défauts. En référence à la figure 1 relative à l'art antérieur, les bandes B1 de la l'image présentent en effet une courbure et un cisaillement, c'est-à-dire que l'image de la barrette, projetée sur la bande balayée de la scène n'est perpendiculaire à sa direction de balayage qu'à mi-course et présente des inclinaisons croissantes et opposées vers les deux extrémités des bandes horizontales. De ce fait, les bords supérieur et inférieur de chaque bande subissent des effets différents, si bien que le raccordement entre le bord supérieur d'une bande et le bord inférieur d'une autre présente un cisaillement horizontal qui se traduit aussi par la présence de marches d'escalier sur les deux bords verticaux de l'image globale.

La demande de brevet FR-A-2 656 430 (N° d'enregistrement national 89 17 166) de la demanderesse enseigne de corriger la courbure des bandes par un choix optimal de l'angle du plan de balayage sur l'axe de rotation. Cependant le problème de correction du cisaillement n'y a pas été traité, le détecteur ne comportant qu'un seul élément. Or la présence du cisaillement exclut tout traitement purement optique, donc simple et rapide, pour supprimer la courbure.

La présente invention vise à réaliser un dispositif de balayage qui ne comporte qu'un seul moteur de balayage et restitue une image globale qui soit quasi exempte de cisaillement.

A cet effet, l'invention concerne un dispositif de balayage pour système d'imagerie, pour le balayage d'une scène par bandes successives, comprenant des moyens déflecteurs, agencés pour être entraînés en rotation autour d'un axe, et comportant une pluralité de facettes d'inclinaisons différentes sur l'axe de rotation et agencées pour réfléchir un faisceau incident (Ri), provenant de la scène en un faisceau réfléchi (Rd) destiné à frapper des moyens de détection, dispositif caractérisé par le fait que les moyens déflecteurs sont disposés par rapport à la scène pour que le faisceau réfléchi (Rd) soit sensiblement orthogonal à l'axe de rotation.

Les documents US-A-4 117 331 et U-A-4 419 692 décrivent des dispositifs selon le préambule de la revendication 1.

Une simulation a démontré que le cisaillement présentait, comme l'illustre la figure 6, un minimum très faible lorsque la seule condition ci-dessus était satisfaite, sans condition supplémentaire sur la valeur absolue des angles.

Ainsi, bien que le dispositif de l'invention ne comporte qu'un nombre minimal d'éléments, il fournit une image quasiment exempte de cisaillement, tout en étant de volume et de coût limités.

L'invention sera mieux comprise à l'aide de la description suivante de la forme de réalisation préférée du dispositif de balayage de l'invention, en référence au dessin annexé, sur lequel :
- les figures 1 à 3 représentent respectivement une image avec courbure et cisaillement, de l'art antérieur, une image avec courbure, mais sans cisaillement, de l'invention, et cette dernière image après correction de courbure,
- la figure 4 est un schéma de principe du dispositif de balayage de l'invention,
- la figure 5 est une vue plus détaillée en coupe du dispositif de la figure 4 et
- la figure 6 représente le cisaillement pour différentes valeurs d'angles d'incidence.

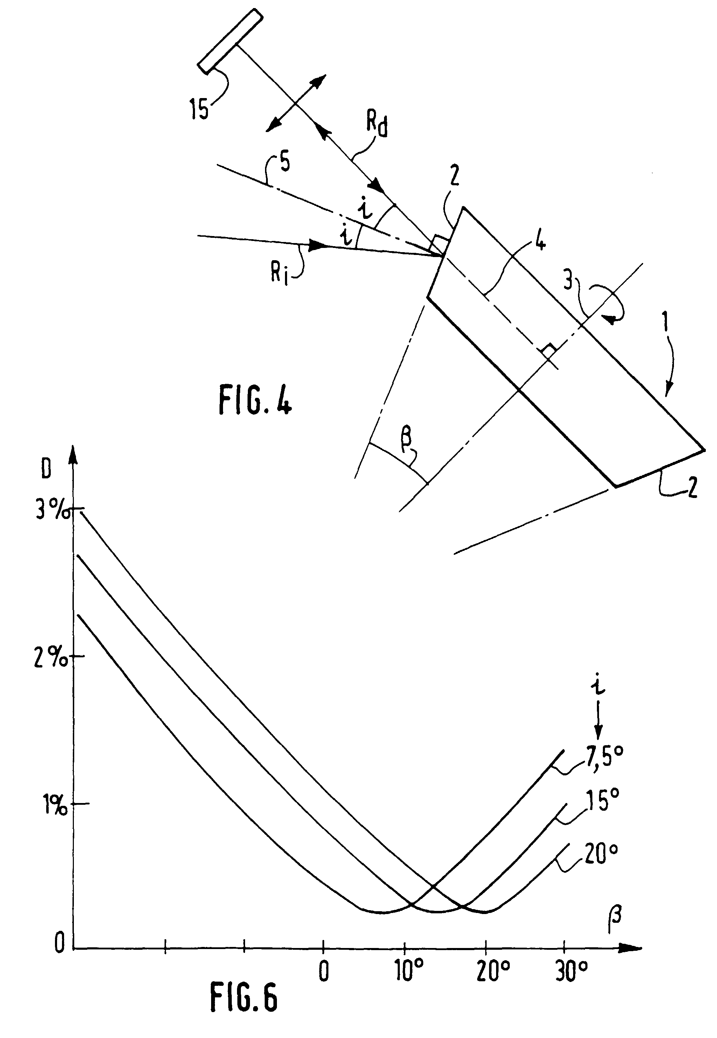

Le dispositif de balayage de la figure 4 comporte un tronc de pyramide régulière 1, à ici dix faces latérales planes 2, monté rotatif autour de l'axe de symétrie 3 du tronc de pyramide. Les faces latérales, ou facettes, 2 présentent, sur l'axe 3, une inclinaison β qui varie légèrement d'une face à l'autre. Un faisceau incident Ri, de rayons parallèles provenant d'une scène observée, est réfléchi sur une des faces 2 pour former un faisceau réfléchi Rd frappant une barrette de détecteurs 15. Le faisceau réfléchi Rd est dans un plan 4 perpendiculaire à l'axe 3 et forme, avec la normale 5 à la surface 2 considérée, un angle i. Le faisceau incident Ri forme, symétriquement, ce même angle i avec la normale 5. Dix bandes jointives permettant de reconstituer l'image globale sont fournies à chaque tour du tronc de pyramide 1.

L'angle i de déflexion des facettes 2 varie donc légèrement, en suivant les variations de l'angle β. On considère, dans la suite de cet exposé, une valeur moyenne pour chacun de ces angles. De même, la direction des faisceaux est une direction moyenne, correspondant aux rayons atteignant la barrette 15 en son milieu.

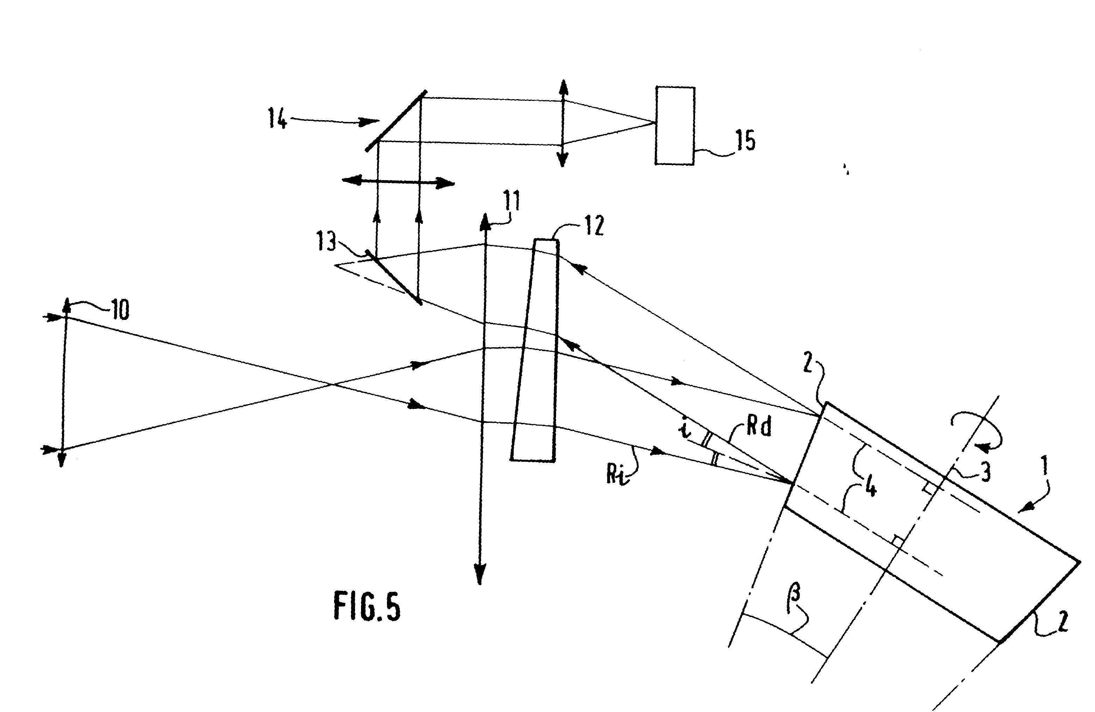

Sur la figure 5, un faisceau parallèle issu de la scène observée traverse un objectif 10 pour former le faisceau incident Ri qui traverse un oculaire 11 puis un prisme 12, d'angle au sommet égal ici à 3 degrés, pour atteindre l'une des faces 2 du tronc de pyramide 1.L'objectif 10 et l'oculaire 11 forment une lunette grossissante. Le faisceau réfléchi Rd traverse en sens inverse le prisme 12 et l'oculaire 11 pour atteindre un miroir de prélèvement 13 puis une optique de renvoi 14 focalisant le faisceau Rd sur la barrette 15, qui alimente un dispositif de visualisation ou d'analyse reconstituant l'image globale.

Le faisceau réfléchi Rd est situé, à la modulation sur l'inclinaison des faces 2 près, sensiblement dans le plan 4 normal à l'axe 3, si bien que l'image de chaque bande B2 de la scène, représentée sur la figure 2, est exempte de cisaillement.

En outre, le prisme 12 corrige l'image de la figure 2 pour lui redonner la forme rectangulaire présentée sur la figure 3, formée de bandes rectangulaires B3. Sinon l'image serait, comme le montre la figure 2, en forme d'éventail, avec des bandes B2 courbes et deux côtés bien rectilignes, sans cisaillement, mais inclinés.

Cette correction est d'autant meilleure que la barrette 15 est, optiquement parlant, sensiblement dans le plan focal de l'oculaire 11, de par la position du miroir de renvoi 13. De ce fait, l'angle d'incidence i sur la face 2 peut être choisi à une valeur très faible, ce qui diminue la courbure de l'image et rend d'autant meilleure la correction que le prisme y apporte.

La figure 6 illustre le résultat de la simulation fournissant le cisaillement D, porté en ordonnée, en fonction de l'angle au sommet β, porté en abscisse, pour trois valeurs de l'angle i.

On voit ainsi que le cisaillement D passe par un même minimum pour i = β quel que soit i. Ce cisaillement D, exprimé en pour-cent de la demi-longueur d'une bande de balayage, présente un minimum d'environ 0,25 %.

On comprendra que le miroir 1 peut être remplacé par un autre moyen déflecteur, déviant, par réflexion ou par transmission, le faisceau incident Ri. Ce peut en particulier être une pluralité, une dizaine ici, de prismes organisés en secteurs autour de l'axe 3 et présentant des angles au sommet différents, ou de prismes mécaniquement identiques mais d'indices différents.

## Revendications

1. Dispositif de balayage pour système d'imagerie, pour le balayage d'une scène par bandes successives, comprenant des moyens déflecteurs (1), agencés pour être entraînés en rotation autour d'un axe (3), et comportant une pluralité de facettes (2) d'inclinaisons différentes sur l'axe de rotation (3) et agencées pour réfléchir un faisceau incident (Ri), provenant de la scène en un faisceau réfléchi (Rd) destiné à frapper des moyens de détection (15), dispositif caractérisé par le fait que les moyens déflecteurs (1) sont disposés par rapport à la scène pour que le faisceau réfléchi (Rd) soit sensiblement orthogonal à l'axe de rotation (3).

2. Dispositif selon la revendication 1, dans lequel les facettes (2) sont formées sur un miroir (1) en tronc de pyramide.

3. Dispositif selon l'une des revendications 1 et 2, dans lequel il est prévu un prisme (12) de compensation de la courbure des bandes de la scène.

4. Dispositif selon la revendication 3, dans lequel le prisme de compensation (12) et les moyens déflecteurs (1) sont agencés pour que le prisme de compensation (12) soit traversé par le faisceau incident (Ri) et le faisceau réfléchi (Rd).

5. Dispositif selon la revendication 4, dans lequel il est prévu une lunette grossissante (10, 11) destinée à être traversée par le rayon incident (Ri) et comprenant un oculaire (11) destiné à être aussi traversé par le rayon réfléchi (Rd).

## Claims

1. Scanning apparatus for an imaging system, for scanning a scene by successive bands, comprising deflector means (1) which are arranged to be driven in rotation about an axis (3), and comprising a plurality of facets (2) at different inclinations with respect to the axis of rotation (3) and arranged to reflect an incident beam (Ri) coming from the scene into a reflected beam (Rd) intended to strike detection means (15), the apparatus being characterised in that the deflector means (1) are disposed with respect to the scene in such a way that the reflected beam (Rd) is substantially orthogonal to the axis of rotation (3).

2. Apparatus according to claim 1, wherein the facets (2) are formed on a mirror (1) having a form of a truncated pyramid.

3. Apparatus according to one of claims 1 and 2, wherein a prism (12) is provided to compensate for the curvature of the bands of the scene.

4. Apparatus according to claim 3, wherein the compensating prism (12) and the deflector means (1) are arranged so that the compensating prism (12) is traversed by the incident beam (Ri) and the reflected beam (Rd).

5. Apparatus according to claim 4, wherein a magnifying telescopic lens system (10,11) is provided which is intented to be traversed by the incident beam (Ri) and comprising an ocular lens (11) intented also to be traversed by the reflected beam (Rd).

## Patentansprüche

1. Abtastvorrichtung für ein Abbildungssystem zum Abtasten einer Szene durch aufeinanderfolgende Streifen, mit Ablenkmitteln (1), welche derart angeordnet sind, daß sie um eine Achse (3) in Rotation versetzbar sind, und mehrere Facetten (2) aufweisen, die zur Rotationsachse (3) unterschiedlich geneigt und derart angeordnet sind, daß sie einen von der Szene ausgehenden einfallenden Strahl (Ri) als einen zum Auftreffen auf Detektionsmitteln (15) bestimmten reflektierten Strahl reflektieren, wobei die Vorrichtung dadurch gekennzeichnet ist, daß die Ablenkmittel (1) derart in bezug auf die Szene angeordnet sind, daß der reflektierte Strahl (Rd) im wesentlichen orthogonal zur Rotationsachse (3) verläuft.

2. Vorrichtung nach Anspruch 1, wobei die Facetten (2) auf einem Spiegel (1) als Pyramidenstumpf ausgebildet sind.

3. Vorrichtung nach einem der Ansprüche 1 oder 2, wobei ein Prisma (12) zur Kompensation der Krümmung der Streifen der Szene vorgesehen ist.

4. Vorrichtung nach Anspruch 3, wobei das Kompensationsprisma (12) und die Ablenkmittel (1) derart angeordnet sind, daß das Kompensationsprisma (12) von dem einfallenden Strahl (Ri) und dem reflektierten Strahl (Rd) durchlaufen wird.

5. Vorrichtung nach Anspruch 4, wobei ein vergrößerndes Fernrohr (10, 11) vorgesehen ist, welches dafür bestimmt ist, vom einfallenden Strahl (Ri) durchlaufen zu werden, und ein Okular (11) aufweist, welches dafür bestimmt ist, ebenfalls vom reflektierten Strahl (Rd) durchlaufen zu werden.
